# EUROPEAN PATENT SPECIFICATION

(11) **EP 2 333 342 B1**
(45) Date of publication and mention of the grant of the patent: **18.07.2012**
(21) Application number: 09014760.4
(22) Date of filing: 26.11.2009
(51) Int. Cl.: F04B 53/00, F04B 49/08, F04B 11/00, F02M 63/02, F16L 55/053, F15B 1/10

(54) **Damping arrangement and pump with a damping arrangement**
Dämpfungsanordnung und Pumpe mit Dämpfungsanordnung
Arrangement d'amortissement et pompe avec un arrangement d'amortissement

(43) Date of publication of application: 15.06.2011
(73) Proprietor: Continental Automotive GmbH, 30165 Hannover (DE)
(72) Inventor: Ricci, Roberto, 57121 Livorno (IT)

(56) References cited:
- EP-A1- 0 905 372
- EP-A1- 1 046 815
- DE-A1- 10 007 180
- DE-A1- 10 247 688
- DE-A1- 19 842 021
- FR-A1- 2 828 240

## Description

The invention relates to a damping arrangement for a hydraulic arrangement and a pump with a damping arrangement.

Preferably such damping arrangements are used in a hydraulic arrangement like a high pressure pump which acts as a fuel pump for an injection arrangement of a combustion engine.

A damping arrangement having the technical features as defined in the preamble of claim 1 is e.g. disclosed in document DE 198 42 021 A1.

High pressure pumps for combustion engines should deliver the necessary mass flow and the necessary fluid pressure. High pressure pumps in combustion engines are subject to high mechanical stress. For example, high pressure pumps in combustion engines are exposed to pressures up to more than 2,000 bar. Therefore, the components as well as the construction of high pressure pumps are subject to high requirements.

One object of the invention is to create a damping arrangement which is simply to be manufactured and that enables a precise function of the hydraulic arrangement. A further object of the invention is to create a pump which has a precise function.

The objects are achieved by the features of the independent claim 1. Advantageous embodiments of the invention are given in the sub-claims.

The damping arrangement according to claim 1 is designed to dampen pressure variations of the fluid in the fluid chamber between the fluid inlet portion and the fluid outlet portion.

This damping arrangement has the advantage that pressure und volume fluctuations can be balanced in a very good manner. The pressure changes in the fluid chamber can be balanced and unwanted oscillations of the mass flow rate can be avoided. Furthermore, a robust solution of the damping arrangement is possible as the bellow and the cover plate can be carried out in a very solid manner. Additionally, an economic solution for the damping arrangement is possible as the bellow and the cover plate can be manufactured at reasonable prices.

In an advantageous variant of claim 1 a first fluid deviation element is arranged between the fluid inlet portion and the cover plate and is designed to direct a fluid flow from the fluid inlet portion to the cover plate in axial direction. This has the advantage that fluid can be directed perpendicular to a surface of the cover plate of the damping element to enable an effective damping of pressure fluctuations. The first fluid deviation element is a perforated disk being fixedly coupled to the housing. The perforated disk faces the cover plate of the damping arrangement and comprises at least one orifice being arranged and designed to direct a fluid flow in axial direction towards the cover plate. This has the advantage that fluid can be directed perpendicular to a surface of the cover plate and a very effective damping may be obtained.

In a further advantageous variant of claim 1 a second fluid deviation element is arranged between the bellow and the fluid outlet portion and is designed to direct a fluid flow in the cavity in a circular direction.

In a further advantageous embodiment the second fluid deviation element has a cylindrical wall part comprising an orifice facing a part of the inner surface being opposite to the fluid outlet portion. By this the fluid can be forced to follow a long flow path through the damping arrangement. The fluid can be firstly directed to the orifice in the wall part. Subsequently, the fluid can be directed between the inner surface of the housing and the wall part of the second fluid deviation element to the outlet portion in circular curves. Consequently, the fluid can be forced to interact with the damping arrangement in a very effective manner.

In a further advantageous embodiment the orifice of the second fluid deviation element is a slot extending in axial direction. This has the advantage that the second fluid deviation element can be manufactured very easily.

In a further advantageous embodiment the damping arrangement comprises a spring being arranged in the damping chamber, being mechanically coupled to the inner surface of the housing and biasing the cover plate. This has the advantage that the damping arrangement can be very resistant against stress. The spring can support the cover plate to maintain a predetermined position of the cover plate.

In a further advantageous embodiment the damping arrangement comprises a further plate being fixedly coupled to the first axial end of the bellow and to the inner surface of the housing. This has the advantage that the plates and the bellow can be carried out as a separate module which can be first inserted into the cavity and subsequently fixed to the inner surface of the housing.

In a further advantageous embodiment the housing comprises an aperture and the further plate is arranged and designed to sealingly cover the aperture.

In a further advantageous embodiment the further plate is being brazed and/or welded to an edge of the aperture to sealingly cover the aperture. This has the advantage that the damping arrangement can be easily manufactured. Furthermore, this is a robust mean to enable a rigid and hermetically sealed coupling of the further plate to the housing.

According to a second embodiment the invention is distinguished by a pump for the delivery of a fluid with a pump housing and a damping arrangement according to the first embodiment. The damping arrangement is fixedly coupled to the pump housing.

Exemplary embodiments of the invention are explained in the following with the aid of schematic drawings. These are as follows:
Figure 1 a pump with a damping arrangement in a schematic view,
Figure 2 the damping arrangement in a longitudinal section view,
Figure 3 the damping arrangement in a perspective view, and
Figure 4 parts of the damping arrangement in a perspective view.

Elements of the same design and function that occur in different illustrations are identified by the same reference character.

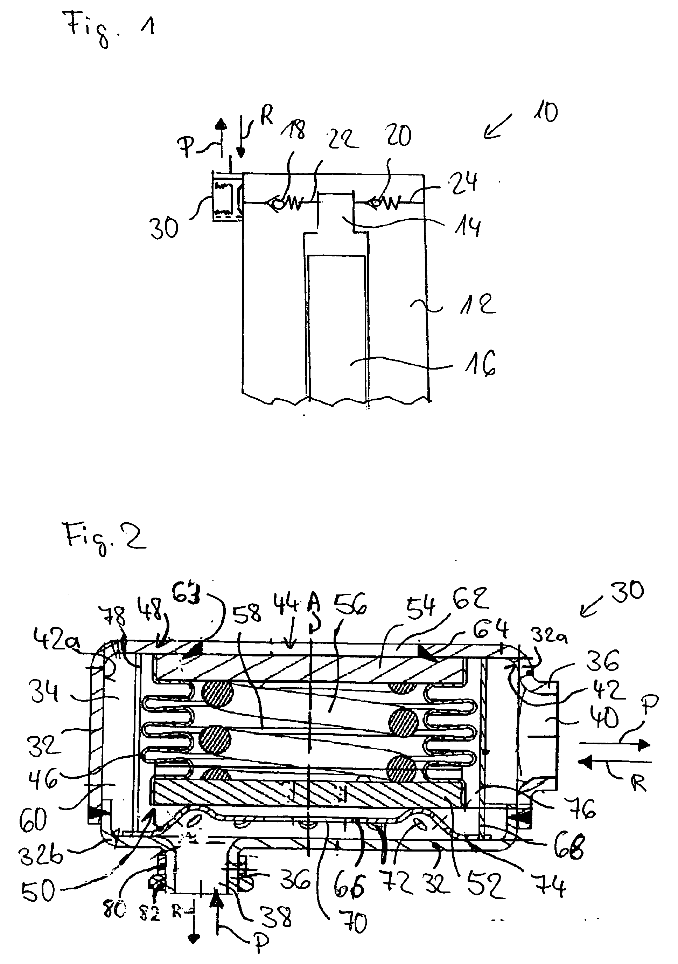

Figure 1 shows a pump 10 with a cylinder 12 which is part of a pump housing. In further embodiments, the pump 10 may comprise further cylinders. The cylinder 12 has a cylinder chamber 14 which takes up a piston 16. The piston 16 may move in a longitudinal direction of the cylinder 14 to compress a fluid which is delivered to the cylinder chamber 14. The pump 10 further comprises an inlet valve 18 and an outlet valve 20. The inlet valve 18 and the outlet valve 20 are arranged in the cylinder 12. Furthermore, the cylinder 12 comprises an inlet tube 22 and an outlet tube 24.

To fill the cylinder chamber 14 with fluid the piston 16 has to move in axial direction and fluid can stream into the cylinder chamber 14 via the inlet valve 18 and the inlet tube 22. An opposite movement of the piston 16 compresses the fluid in the cylinder chamber 14. The compressed fluid may be ejected via the outlet valve 20 and the outlet tube 24.

The pump 10 comprises a damping arrangement 30, which is fixedly coupled to the cylinder 12. Figure 2 shows a longitudinal section through the damping arrangement 30. The damping arrangement 30 has a housing 32. In the shown embodiment the housing 32 consists of two parts, an upper part 32a and a lower part 32b. The upper part 32a and the lower part 32b are coupled to form a single containment. The cross-section of the housing 32 may be of any shape, in particular of a circular or square shape.

The housing 32 of the damping arrangement 30 has a cavity 34. The housing has two unions 36. One of the two unions 36 comprises a fluid inlet portion 38 and the other of the two unions 36 comprises a fluid outlet portion 40. It has to be emphasised that the expressions "fluid inlet portion" and "fluid outlet portion" are hereby used in the sense that describes a direction P of pulsations of the fluid, for example pulsations of the pump 10 of Figure 1. The direction P of the pulsations is not necessarily identical with the regular direction R of the fluid due to regular operating conditions of the pump 10. In particular, the direction R of the fluid flow of the pump 10 and the damping arrangement 30 as described herein during regular operating condition is opposite to the direction P of pulsations. In the following the damping arrangement 30 will be described in view of the direction P of pulsations from the fluid inlet portion 38 to the fluid outlet portion 40.

The cavity 34 forms an inner surface 42 of the housing 32.

The damping arrangement 30 comprises a damping unit 44 which is arranged inside the housing 32 in the cavity 34. The damping unit 44 has a bellow 46 which has a longitudinal central axis A and a first axial end 48 and a second axial end 50. The damping unit 44 further comprises a cover plate 52 which is arranged in the cavity 34 and is fixedly coupled to the second axial end 50 of the bellow 46. Furthermore, the damping unit 44 comprises a further plate 54. The first axial end 48 of the bellow 46 is fixedly coupled to the further plate 54. In alternative embodiments the first axial end 48 of the bellow 46 is directly coupled to the inner surface 42 of the housing 32. The cover plate 52 and the further plate 54 allow separating a damping chamber 58 which may be free of fluid from a fluid chamber 60 which is part of the cavity 34. As the cover plate 52 and the bellow 46 can oscillate in axial direction, the cover plate 52 and the bellow 46 allow the compensation of pressure variations of the fluid in the fluid chamber 60 of the damping arrangement 30.

The damping chamber 58 further comprises a spring 56 which is mechanically coupled to the cover plate 52 and to the further plate 54. The spring 56 may support the cover plate 52 and takes up the axial movement of the cover plate 52. Preferably, the spring 56 is a coil spring, as this allows a lowcost solution for the damping arrangement 30.

The housing 32 comprises an aperture 62. The further plate 54 is arranged below the aperture 62. Preferably, the further plate 54 is coupled to the inner surface 42 of the housing 32 to sealingly cover the aperture 62. To obtain this, the further plate 54 is brazed or welded to an edge 63 of the aperture 62 with a brazing or welding seam 64.

The damping arrangement 30 comprises a first fluid deviation element 66 and a second fluid deviation element 68.

The first fluid deviation element 66 is arranged between the fluid inlet portion 38 and the cover plate 32. The first fluid deviation element 66 is formed as a perforated disk with a main orifice 70. The main orifice 70 is arranged in the centre of the first fluid deviation element 66 so that the fluid flow which comes from the fluid inlet portion 38 is directed in axial direction to the cover plate 52.

The first fluid deviation element 66 comprises further orifices 72 which are arranged circularly relative to the central longitudinal axis A. As the direction R of the regular fluid flow is contrary to the direction P of pulsations the regular fluid flow is directed from the fluid outlet portion 40 to the fluid inlet portion 38 and the further orifices 72 enable a fluid flow from the fluid chamber 60 to the fluid inlet portion 38. The first fluid deviation element 66 further comprises an edge 74 which is fixedly coupled to the inner surface 42 of the housing 32.

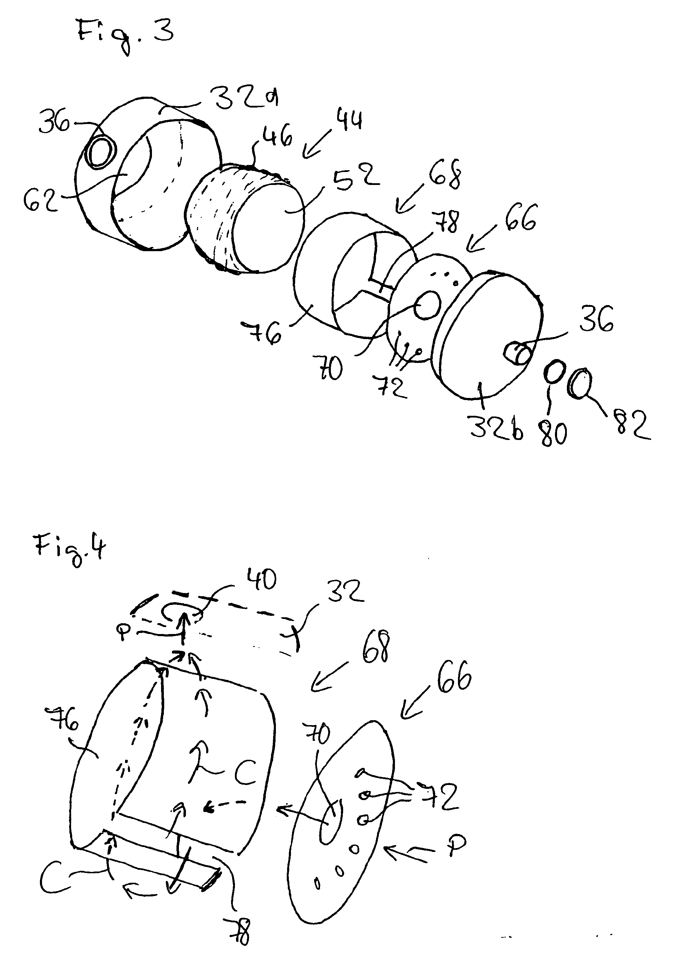

The second fluid deviation element 68 is arranged between the bellow 46 and the housing 32. The second fluid deviation element 68 has a cylindrical shape and extends in axial direction. The second fluid deviation element 68 comprises a wall part 76. An orifice 78 is arranged in the wall part 76 and faces a part 42a of the inner surface 42 which is opposite to the fluid outlet portion 40. Preferably, the orifice 78 is formed as a slot which extends in axial direction (Figures 3 and 4).

On an outer surface of the union 36 which comprises the fluid inlet portion 38 a backup ring 80 and a sealing ring 82 are arranged, which enable a good sealing of the damping arrangement 30 relative to a further hydraulic arrangement which may be the pump 10.

In the following the function of the damping arrangement 30 will be described in detail:

A pulsation of the fluid caused by the hydraulic behavior of the hydraulic arrangement enters the housing 32 through the fluid inlet portion 38 and leaves the housing 32 through the fluid outlet portion 40 in direction P. The pulsation can cause pressure variations in the fluid chamber 60. The fluid flows from the fluid inlet portion 38 through the main orifice 70 of the first fluid deviation element 66 in axial direction towards the cover plate 52. Due to the energy of the pulsation the cover plate 52 compresses the bellow 46 so that the energy of the pulsation can be at least partially absorbed by the damping unit 44.

The wall part 76 forces the fluid to flow in a radial direction through the orifice 78 of the second fluid deviation element 68. Subsequently, the fluid is directed inside the fluid chamber 60 in circular flow directions C between the inner surface 42 of the housing 32 and the wall part 76. Consequently, the fluid is split into two separate flows in two circular directions C which unify near the fluid outlet portion 40 of the housing 32 and leaves the damping arrangement 30 through the fluid outlet portion 40 (Figure 4). As the fluid of the pulsation is forced to enter through the main orifice 70 of the first fluid deviation element 66, the damping arrangement with the bellow 46 obtains an optimal dampening effect of the pressure oscillations in the fluid chamber 60. Furthermore, as the pulsation is not able to directly go from the main orifice 70 to the fluid outlet portion 40 due to the shape of the second fluid deviation element 68, the fluid is forced to go through the annular chamber between the housing 32 and the wall part 76. The first fluid deviation element 66 and the second fluid deviation element 68 enable an effective damping of the pulsations of the fluids.

In general, the damping arrangement 30 with the first fluid deviation element 66 and the second fluid deviation element 68 allows an economical solution for the damping arrangement 30 as the embodiment of the damping arrangement 30 needs only a few parts to optimize the operation of the damping arrangement 30, and in particular, the damping unit 44.

## Claims

1. Damping arrangement (30) for a hydraulic arrangement, with
- a housing (32) having a cavity (34) forming an inner surface (42), wherein the cavity (34) comprises a fluid inlet portion (38) and a fluid outlet portion (40);
- a bellow (46) having a longitudinal axis (A), being arranged in the cavity (34) and being fixedly coupled to the inner surface (42) of the housing (32) at a first axial end (48); and
- a cover plate (52) being arranged in the cavity (34) and being fixedly coupled to a second axial end (50) of the bellow (46) in a manner to sealingly separate a damping chamber (58) of the cavity (34) from a fluid chamber (60) of the cavity (34), and the cover plate (52) and the bellow (46) being designed to oscillate in axial direction;
**characterized in that** a first fluid deviation element (66) is arranged between the fluid inlet portion (38) and the cover plate (52) and is designed to direct a fluid flow from the fluid inlet portion (38) to the cover plate (52) in axial direction, wherein the first fluid deviation element (66) is a perforated disk being fixedly coupled to the housing (32), the perforated disk facing the cover plate (52) of the damping arrangement (30) and comprising at least one orifice (70) being arranged and designed to direct a fluid flow in axial direction towards the cover plate (52);
and/or
**in that** a second fluid deviation element (68) is arranged between the bellow (46) and the fluid outlet portion (40) and is designed to direct a fluid flow in the cavity (34) in a circular direction (C).

2. Damping arrangement (30) according to claim 1, wherein the second fluid deviation element (68) has a cylindrical wall part (76) comprising an orifice (78) facing a part of the inner surface (42) being opposite to the fluid outlet portion (40).

3. Damping arrangement (30) according to claim 2, wherein the orifice (78) of the second fluid deviation element (68) is a slot extending in axial direction.

4. Damping arrangement (30) according to one of the preceding claims, wherein the damping arrangement (30) comprises a spring (56) being arranged in the damping chamber (58), being mechanically coupled to the inner surface (42) of the housing (32) and biasing the cover plate (52).

5. Damping arrangement (30) according to one of the preceding claims, wherein the damping arrangement (30) comprises a further plate (54) being fixedly coupled to the first axial end (48) of the bellow (46) and to the inner surface (42) of the housing (32).

6. Damping arrangement (30) according to claim 5, wherein the housing (32) comprises an aperture (62) and the further plate (54) is arranged and designed to sealingly cover the aperture (62).

7. Damping arrangement (30) according to claim 6, wherein the further plate (54) is being brazed and/or welded to an edge (63) of the aperture (62) to sealingly cover the aperture (62).

8. Pump (10) for the delivery of a fluid with a pump housing and a damping arrangement (30) according to one of the preceding claims, wherein the damping arrangement (30) is fixedly coupled to the pump housing.

## Patentansprüche

1. Dämpfungsanordnung (30) für eine hydraulische Anordnung, mit
• einem Gehäuse (30), das einen eine innere Oberfläche (43) bildenden Hohlraum (34) aufweist, wobei der Hohlraum (34) einen Fluid-Einlassabschnitt (38) und einen Fluid-Auslassabschnitt (40) umfasst;
• einem Balgen (46) mit einer Längsachse (A), der in dem Hohlraum (34) angeordnet ist und an einem ersten axialen Ende (48) fest mit der inneren Oberfläche (42) des Gehäuses (32) verbunden ist; und
• einem Deckblech (52), das in dem Hohlraum (34) angeordnet und mit einem zweiten axialen Ende (50) des Balgens (46) fest verbunden ist derart, eine Dämpfungskammer (58) des Hohlraums (34) von einer Fluidkammer (60) des Hohlraums (34) dichtend zu trennen, und wobei das Deckblech (52) und der Balgen (46) dazu konstruiert sind, sich in der axialen Richtung hin und her zu bewegen, **dadurch gekennzeichnet, dass**
• eine erstes Fluid-Ablenkungselement (66) zwischen dem Fluid-Einlassabschnitt (38) und dem Deckblech (52) angeordnet ist und dazu konstruiert ist, eine Fluidströmung in axialer Richtung von dem Fluid-Einlassabschnitt (38) zu dem Deckblech (52) zu lenken, wobei das erste Fluid-Ablenkungselement (66) eine fest mit dem Gehäuse (32) verbundene durchbohrte Scheibe ist, die durchbohrte Scheibe dem Deckblech (52) der Dämpfungsanordnung (30) gegenüber steht und mindestens ein Mundloch (70) umfasst, das dazu angeordnet und konstruiert ist, eine Fluidströmung in axialer Richtung zu dem Deckblech (52) hin zu lenken;
• und/oder **dadurch**, dass
• ein zweites Fluid-Ablenkungselement (68) zwischen dem Balgen (46) und dem Fluid-Auslassabschnitt (40) angeordnet und dazu konstruiert ist, eine Fluidströmung in dem Hohlraum (34) in einer zirkulären Richtung (C) zu lenken.

2. Dämpfungsanordnung (30) gemäß Anspruch 1, wobei das zweite Fluid-Ablenkungselement (68) einen ein Mundloch (78) umfassenden zylindrischen Wandteil (76) aufweist, der einem Teil der inneren Oberfläche (42) gegenüber steht, welcher entgegengesetzt zu dem Fluid-Auslassabschnitt (40) ist.

3. Dämpfungsanordnung (30) gemäß Anspruch 2, wobei das Mundloch (78) des zweiten Fluid-Ablenkungselements (68) ein sich in axialer Richtung erstreckendes Langloch ist.

4. Dämpfungsanordnung (30) gemäß irgendeinem der vorhergehenden Ansprüche, wobei die Dämpfungsanordnung (30) eine in der Dämpfungskammer (58) angeordnete Feder (56) umfasst, die mechanisch mit der inneren Oberfläche (42) des Gehäuses (32) verbunden ist und das Deckblech (52) vorspannt.

5. Dämpfungsanordnung (30) gemäß irgendeinem der vorhergehenden Ansprüche, wobei die Dämpfungsanordnung (30) ein weiteres Blech (54) umfasst, das fest mit dem ersten axialen Ende (48) des Balgens (46) und mit der inneren Oberfläche (42) des Gehäuses (32) verbunden ist.

6. Dämpfungsanordnung (30) gemäß Anspruch 5, wobei das Gehäuse (32) eine Öffnung (62) umfasst und das weitere Blech (54) dazu angeordnet und konstruiert ist, die Öffnung (62) dichtend abzudecken.

7. Dämpfungsanordnung (30) gemäß Anspruch 6, wobei das weitere Blech (54) mit einem Rand (63) der Öffnung (62) hartverlötet und/oder verschweisst ist, um die Öffnung (62) dichtend abzudecken.

8. Pumpe (10) für die Abgabe eines Fluides mit einem Pumpengehäuse und einer Dämpfungsanordnung (30) gemäß irgendeinem der vorhergehenden Ansprüche, wobei die Dämpfungsanordnung (30) mit dem Pumpengehäuse fest verbunden ist.

## Revendications

1. Dispositif d'amortissement (30) pour un système hydraulique, comprenant :
- un logement (32) ayant une cavité (34) formant une surface interne (42), la cavité (34) comprenant une partie d'entrée de fluide (38) et une partie de sortie de fluide (40) ;
- un soufflet (46) ayant un axe longitudinal (A), aménagé dans la cavité (34) et couplé de manière fixe à la surface interne (42) du logement (32) à une première extrémité axiale (48) ; et
- une plaque de recouvrement (52) aménagée dans la cavité (34) et couplée de manière fixe à une seconde extrémité axiale (50) du soufflet (46) pour séparer de façon étanche une chambre d'amortissement (58) de la cavité (34) d'une chambre de fluide (60) de la cavité (34), et la plaque de recouvrement (52) et le soufflet (46) sont conçus pour osciller dans la direction axiale ;
**caractérisé en ce que**
un premier élément de déviation de fluide (66) est aménagé entre la partie d'entrée de fluide (38) et la plaque de recouvrement (52), et est conçu pour diriger un écoulement de fluide de la partie d'entrée de fluide (38) à la plaque de recouvrement (52) dans la direction axiale, lequel le premier élément de déviation de fluide (66) est un disque perforé qui est couplé de manière fixe au logement (32), le disque perforé faisant face à la plaque de recouvrement (52) du dispositif d'amortissement (30) et comprenant au moins un orifice (70) aménagé et conçu pour diriger un écoulement de fluide dans la direction axiale vers la plaque de recouvrement (52) ;
et/ou **en ce que**
un second élément de déviation de fluide (68) est aménagé entre le soufflet (46) et la partie de sortie de fluide (40), et est conçu pour diriger un écoulement de fluide dans la cavité (34), dans une direction circulaire (C).

2. Dispositif d'amortissement (30) selon la revendication 1, dans lequel le second élément de déviation de fluide (68) a une partie de paroi cylindrique (76) comprenant un orifice (78) faisant face à une partie de la surface interne (42) qui est opposée à la partie de sortie de fluide (40).

3. Dispositif d'amortissement (30) selon la revendication 2, dans lequel l'orifice (78) du second élément de déviation de fluide (68) est une fente s'étendant dans la direction axiale.

4. Dispositif d'amortissement (30) selon l'une quelconque des revendications précédentes, lequel dispositif d'amortissement (30) comprend un ressort (56) aménagé dans la chambre d'amortissement (58), couplé mécaniquement à la surface interne (42) du logement (32) et pressant la plaque de recouvrement (52).

5. Dispositif d'amortissement (30) selon l'une quelconque des revendications précédentes, lequel dispositif d'amortissement (30) comprend une autre plaque (54) qui est couplée de manière fixe à la première extrémité axiale (48) du soufflet (46) et à la surface interne (42) du logement (32).

6. Dispositif d'amortissement (30) selon la revendication 5, dans lequel le logement (32) comprend une ouverture (62) et l' autre plaque (54) est aménagée et conçue pour recouvrir l'ouverture (62) de façon étanche.

7. Dispositif d'amortissement (30) selon la revendication 6, dans lequel l'autre plaque (54) est brasée et/ou soudée à un bord (63) de l'ouverture (62) pour recouvrir l'ouverture (62) de façon étanche.

8. Pompe (10) destinée à délivrer un fluide avec un logement de pompe et un dispositif d'amortissement (30) selon l'une quelconque des revendications précédentes, dans laquelle le dispositif d'amortissement (30) est couplé de manière fixe au logement de pompe.
